# EUROPÄISCHE PATENTSCHRIFT

(11) **EP 1 952 466 B1**
(45) Veröffentlichungstag und Bekanntmachung des Hinweises auf die Patenterteilung: **30.09.2009**
(21) Anmeldenummer: 06818803.6
(22) Anmeldetag: 24.11.2006
(51) Int. Cl.: H01M 4/76, H01M 4/04

(54) **VORRICHTUNG ZUM VERSCHLIESSEN VON ROHRPLATTEN VON BATTERIEN**
APPARATUS FOR SEALING TUBE PLATES OF BATTERIES
DISPOSITIF DE FERMETURE DE PLAQUES TUBULAIRES DE BATTERIES

(30) Priorität: 26.11.2005 DE 102005056430
(43) Veröffentlichungstag der Anmeldung: 06.08.2008
(73) Patentinhaber: HOPPECKE Batterien GmbH & Co. KG, 59929 Brilon (DE)
(72) Erfinder: VON ALVENSLEBEN, Ferdinand, 33181 Bad Wünnenberg-Fürstenberg (DE); CLEMENS, Walter, 51429 Bergisch Gladbach (DE); KESPER, Heinrich, 34508 Willingen (DE)
(74) Vertreter: Stenger, Watzke & Ring
(86) Internationale Anmeldenummer: PCT/EP2006/011284
(87) Internationale Veröffentlichungsnummer: WO 2007/059987

(56) Entgegenhaltungen:
- DE-A1- 3 301 988
- DE-B- 1 082 639
- DE-B- 1 142 925
- GB-A- 2 043 328
- GB-A- 2 160 700
- US-A- 4 359 509

## Beschreibung

Die vorliegende Erfindung betrifft eine Vorrichtung zum Verschließen von Rohrplatten von Batterien, vorzugsweise Bleibatterien, nach dem Oberbegriff des Anspruchs 1.

Eine gattungsgemäße Vorrichtung mit den Merkmalen des Oberbegriffs des Anspruchs 1 ist aus der US 4,359,509 bekannt.

Ferner sind aus dem Stand der Technik verschiedene Vorrichtungen zum Verschließen von Rohrplatten bekannt. So offenbart beispielsweise die GB 1 428 978 eine längliche Abdeckung für Batterierohrplatten, die aus einem Kunststoffmaterial besteht und nach Aufschieben auf die endseitigen Bereiche der Rohrplatte durch Einwirkung von Wärme auf diese aufgeschrumpft wird.

Die GB 2 043 328 A offenbart eine Abschlußleiste für Rohrplatten, die eine Vielzahl von miteinander verbundenen, runden Spundverschlüssen aus Kunststoff aufweist. Jeweils ein Verschluß verschließt ein Rohr der Rohrplatte. Die Verschlüsse weisen an ihrem rohrplattenseitigen Ende eine Durchgangsöffnung zur Aufnahme von innerhalb der Rohrplatte angeordneten stabartigen Seelen auf. Die Öffnung zur Aufnahme der Seele ist mit einem konischen, elastischen Rand versehen, der sich aufgrund seiner Elastizität fest an die aufzunehmende Seele anschmiegt und so der Befestigung der Fußleiste in der Rohrplatte dient.

Die GB 2 160 700 A offenbart eine Fußleiste für Rohrplatten mit runden Verschlußelementen, die mit einer Durchgangsöffnung zur Aufnahme von in der Rohrplatte angeordneten Seelen versehen ist. An ihrer von der Rohrplatte abgewandten Seite weist die Fußleiste Ausnehmungen auf, so daß die in den Durchgangsöffnungen aufgenommenen Endbereiche der Seelen frei liegen und zugänglich sind. Nach erfolgter Montage der Fußleiste an der Rohrplatte werden die durch die Durchgangsöffnung hindurchragenden Bereiche der Seelen dauerhaft plastisch verformt, so daß ein Lösen der Verschlußleiste von der Rohrplatte nicht möglich ist.

Die DE 32 07 601 C1 offenbart eine Vorrichtung und ein Verfahren zur automatischen Befüllung von Rohrplatten, bei der Fußrahmenleisten nach dem Befüllen mit einer aktiven pastösen Masse mittels eines Ultraschallschweißgerätes mit den Rohrplatten verschweißt werden.

Die DE 39 32 283 A1 offenbart eine Rohrplattenfüllmaschine, bei der Rohrplatten mittels selbstklemmender Fußrahmenleisten mit Widerhaken nach dem Dübelprinzip von Hand verschlossen werden.

Ausgehend von dem zuvor beschriebenen Stand der Technik liegt der vorliegenden Erfindung die **Aufgabe** zugrunde, eine gegenüber dem Stand der Technik verbesserte Vorrichtung zum Verschließen von Rohrplatten gemäß dem Oberbegriff des Anspruchs 1 vorzuschlagen, die vorzugsweise automatisch nach dem Zusammenfügen mit der Rohrplatte ohne zusätzliche Verfahrensschritte zu deren Befestigung oder pastendichten Abdichtung wie Schweißen, Kleben oder Schrumpfen an dieser sicher und dauerhaft anzuordnen ist und gleichzeitig ein Austreten von in der Rohrplatte befindlichem aktiven Material verhindert.

Als **Lösung** wird mit der Erfindung eine gattungsgemäße Vorrichtung vorgeschlagen, die die kennzeichnenden Merkmale des Anspruchs 1 aufweist.

Das Anordnen der erfindungsgemäßen Vorrichtung erfolgt vorzugsweise automatisch nach dem Befüllen der Rohrplatte mit der aktiven pastösen Masse. Dabei wird die Vorrichtung endseitig auf die Rohrplatte aufgeschoben, so daß die Vorsprünge in die endseitigen Öffnungen der Rohre eindringen. In der bestimmungsgemäßen Lage der Vorrichtung verklemmen sich die Vorsprünge auf beliebige Weise mit den Wandungen des jeweiligen Rohres. Durch die Klemmwirkung zwischen Vorsprung und Rohrwandung ist eine sichere und dauerhafte Aufnahme der Vorrichtung sichergestellt. Eine Abdichtung der Rohrplatte gegen ein Austreten der pastösen Masse kann sowohl über einen massendichten Kontakt zwischen den Vorsprüngen und den Wandungen, als auch über eine massendichte Kontaktierung der Rohrplatte mit dem Grundkörper erfolgen.

Vorzugsweise sind wenigstens zwei benachbarte Vorsprünge mit Rastmitteln versehen, die mit den Wandungen der Rohre verklemmen. Die Rastmittel können grundsätzlich beliebiger Gestalt sein. Besonders vorteilhaft sind ringförmig um den Umfang der Vorsprünge verlaufende Rastmittel, da diese neben der Klemmwirkung gleichzeitig für eine Abdichtung der Rohrplatte verwendet werden können. Allerdings sind auch Rastmittel in Form von Haken oder ähnlichem denkbar, die an bestimmten Stellen des Umfangs der Vorsprünge angeordnet sind. In diesem Fall erfolgt die Abdichtung der Rohrplatte vorzugsweise über den Grundkörper. Die Rastmittel sind vorzugsweise derart ausgebildet, daß sie ein Einschieben der Vorrichtung in die Rohrplatte einfach ermöglichen und gleichzeitig bei deren versuchter Trennung so mit dem Wandungen verklemmen, daß ein Lösen der Vorrichtung verhindert wird.

Eine besonders vorteilhafte Ausführungsform der Vorrichtung sieht vor, daß die die Wandungen kontaktierenden Bereiche der Rastmittel benachbarter Vorsprünge vom Grundkörper unterschiedlich beabstandet sind. Auf diese Weise sind zwischen den auf dem Grundkörper angeordneten Vorsprüngen Zwischenräume ausgebildet, die labyrinthartig geformt sind. In den Zwischenräumen werden bei der bestimmungsgemäßen Anordnung der Vorrichtung an der Rohrplatte nach deren Befüllen mit aktiver pastöser Masse die Wandung bzw. die Wandungen benachbarter Rohre der Rohrplatten angeordnet. Die Breite der Zwischenräume richtet sich nach der Stärke der in ihnen angeordneten Wandung bzw. Wandungen. Der zwischen den die Wandung kontaktierenden Bereichen der Rastmittel vorliegende Abstand ist kleiner als die Stärke der im Zwischenraum befindlichen Wandung bzw. der Wandungen. Die Wandungen, die elektrolytdurchlässig und pastendicht sind, verformen sich entsprechend der Form dieser Zwischenräume. Aufgrund der Eigenstabilität und Elastizität der Wandungen kommt es zur Ausbildung von Klemmkräften zwischen Wandung und Rastmittel. Diese Klemmkräfte werden durch die quer zur Fügerichtung der erfindungsgemäßen Vorrichtung und der Rohrplatte verlaufenden Verformungen verstärkt, wodurch in vorteilhafter Weise der Halt der Vorrichtung in den Rohren verbessert wird. Eine sichere und dauerhafte Aufnahme der Wandungen in den zwischen den Vorsprüngen vorliegenden Zwischenräumen - das heißt, eine sichere und dauerhafte Aufnahme der erfindungsgemäßen Vorrichtung an der Rohrplatte - und andererseits eine hervorragende Abdichtung hinsichtlich eines Austretens von in den Rohrplatten vorliegendem pastösen aktivem Material wird so erreicht.

Ein besonders sicherer Sitz der erfindungsgemäßen Vorrichtung wird gemäß einer besonderen Ausführungsform erreicht, indem die die Wandungen kontaktierenden Bereiche der Rastmittel benachbarter Vorsprünge sich in einer zum Grundkörper parallelen Richtung überlappen. Hierdurch wird eine besonders starke Verformung der zwischen den Vorsprüngen vorliegenden Wandungsbereiche erzielt, so daß es zu einem Anwachsen der dort vorliegenden Klemmkräfte kommt.

Eine bevorzugte Ausführungsform sieht vor, daß die Vorsprünge einen am Grundkörper angeordneten stiftartigen Verbindungsbereich aufweisen, an dessen vom Grundkörper abgewandten Ende ein Kopfbereich angeordnet ist. Die Außenkontur dieses Kopfbereiches ist vorzugsweise entsprechend dem Innenquerschnitt des jeweiligen Rohres ausgebildet. Weiterhin wird mit der Erfindung vorgeschlagen, daß die Vorsprünge eine am Grundkörper angeordnete ringförmige Wandung aufweisen können, deren vom Grundkörper abgewandte Seite wiederum mit einem Kopfbereich verschlossen ist, so daß zwischen Kopfbereich und der ringförmigen Wandung ein Hohlraum ausgebildet ist. Auch die Außenkontur dieses Kopfbereiches ist vorzugsweise entsprechend dem Innenquerschnitt des jeweiligen Hohlraums der Rohrplatte ausgebildet sein. Beide Ausführungsformen sind mit einfachen Mitteln herzustellen und ermöglichen eine lagedefinierte und stabile Aufnahme der einzelnen Vorsprünge in den jeweiligen Rohren. Vorteilhafterweise entsprechen die Abmessungen der Außenkontur des Kopfbereiches dem Innenquerschnitt des jeweiligen Rohres, während sowohl der stiftartige Verbindungsbereich als auch die ringförmige Wandung eine Außenkontur mit gegenüber dem Kopfbereich verminderter Querschnittsstärke aufweisen. Durch eine solche Ausbildung wird das Einfügen der Vorsprünge in die jeweiligen Rohre sowie die Verformung der Wandungen erleichtert. Gleichzeitig ist eine stabile und dauerhafte Befestigung der Kopfbereiche am Grundkörper der Vorrichtung gewährleistet. Der Kopfbereich kann unabhängig vom stiftartigen Verbindungsbereich oder der ringförmigen Wandung entsprechend dem Innenquerschnitt des jeweiligen Hohlraums ausgebildet sein.

Die unterschiedliche Beabstandung der die Wandungen kontaktierenden Bereiche der Rastmittel benachbarter Vorsprünge vom Grundkörper kann gemäß einem vorteilhaften Vorschlag der Erfindung dadurch erzielt werden, daß die Kopfbereiche der Vorsprünge vom Grundkörper der Vorrichtung gleich beabstandet sind, während die Rastmittel unterschiedliche Längen aufweisen. Auf diese Weise ist sichergestellt, daß die Kopfbereiche der Vorsprünge gleich tief in die jeweiligen Rohre eindringen. Ein gleichbleibendes Volumen der einzelnen Rohre der Rohrplatte ist somit gewährleistet, was bedeutet, daß die durch jeweils einen Rohr ausgebildeten elektrischen Zellen die gleiche Menge der pastösen aktiven Masse aufnehmen können und dann eine gegeneinander abgeglichene Leistungsfähigkeit besitzen.

Es wird mit der Erfindung des Weiteren vorgeschlagen, daß die Kopfbereiche nebeneinander liegender Vorsprünge vom Grundkörper unterschiedlich beabstandet sind. Besonders vorteilhaft kann in diesem Fall auf Rastmittel unterschiedlicher Länge verzichtet werden, wodurch ein sicherer Sitz der Wandungen an Rand des Kopfbereiches und eine verbesserte pastendichte Abdichtung der Endseite jedes Rohres gewährleistet ist.

Nach einer weiteren Ausführungsform der Erfindung sind die Rastmittel am Kopfbereich angeordnet. Auf diese Weise ist ein sicherer Kontakt zwischen Rastmittel und Wandungen der Rohrplatte und deren ausreichende Klemmung gewährleistet, da so sichergestellt ist, daß die Rastmittel genügend tief in das jeweilige Rohr eingeschoben sind. Die Rastmittel können als um den gesamten Kopfbereich umlaufender Vorsprung oder als am Kopfbereich angeordnete Haken ausgebildet sein. Die Anzahl und Position der Haken am Kopfbereich kann beliebig ausgewählt sein, es hat sich allerdings als vorteilhaft herausgestellt, wenn die Haken an der dem Grundkörper zugewandten Seite des Kopfbereiches angeordnet sind. Um das Labyrinth zwischen benachbarten Vorsprüngen auszubilden, sind die Rastmittel vorzugsweise an einander gegenüberliegenden Stellen benachbarter Vorsprünge angeordnet. Die Rastelemente sind vorzugsweise elastisch, so daß sie sich der jeweils einstellenden Kontur der Wandungen anschmieden können. Unabhängig davon, ob die Rastmittel ein umlaufender Vorsprung oder Haken sind, erstrecken sie sich in vorteilhafter Weise vom Kopfbereich in Richtung des Grundkörpers radial nach außen. So wird ein Einschieben der erfindungsgemäßen Vorrichtung in eine Rohrplatte erleichtert, da die Rastmittel aufgrund ihrer Elastizität in Richtung des Verbindungsstiftes bzw. der ringförmigen Wandung einfedern. Ein Lösen von Vorrichtung und Rohrplatte ist dagegen nicht oder allenfalls nur sehr schwer möglich, da die Rastmittel dabei aufgrund ihrer Orientierung in den zwischen den Vorsprüngen vorliegenden Zwischenraum hinein federn und es so zu einem Ansteigen der Klemmkräfte zwischen der Wandung bzw. den Wandungen und den an ihnen anliegenden Rastmitteln kommt. Durch die erfindungsgemäße Ausgestaltung ist somit nach dem Einschieben der Vorsprünge in die Rohrplatte deren automatische Befestigung gesichert. Die Rastmittel sind derart am Kopfbereich angeordnet, daß die Wandung vorzugsweise am Kopfbereich selbst anliegt, wodurch ein dichter Verschluß der endseitigen Öffnung der Hohlräume ermöglicht und ein Austreten des pastösen aktiven Materials verhindert wird. Falls die Rastelemente als Haken angeordnet sind, so ist der Kopfbereich in diesem Fall derart geformt, daß die Abdichtung gewährleistet ist.

Nach einer weiteren Ausführungsform der Erfindung weisen die Kopfbereiche der Vorsprünge an ihrer vom Grundkörper abgewandten Seite eine konisch ausgebildete Kontur auf. Diese erleichtert das Einführen der Kopfbereiche bzw. der Vorsprünge in die entsprechenden Rohre der Rohrplatte. Die konische Kontur kann in Form einer kegelartigen Außenfläche oder in Form von konisch zueinander angeordneten Einzelflächen ausgebildet sein. In jedem Fall dient die Kontur einer Führung der endseitigen Bereiche der Wandungen, so daß diese automatisch beim Einschieben der erfindungsgemäßen Vorrichtung bestimmungsgemäß in die zwischen den Vorsprüngen vorliegenden Zwischenräume geführt werden.

Nach einer weiteren Ausführungsform der Erfindung ist der Grundkörper im Wesentlichen leistenförmig ausgebildet. Die Abmessungen des Grundkörpers sowie die Anzahl der an diesem angeordneten Vorsprünge sind an die Anzahl der Rohre der Rohrplatte sowie deren Abmessungen angepaßt. Besonders vorteilhaft weist der Grundkörper eine Anschlagfläche auf, an die die Wandungen die Rohrplatte bei bestimmungsgemäßer Anordnung vorzugsweise dichtend - d. h., einen Austritt des pastösen aktiven Materials vermeidend - anstoßen. Durch die Anschlagfläche wird einerseits gewährleistet, daß die einzelnen Vorsprünge mit einer definierten Tiefe in die jeweiligen Hohlräume eindringen, während andererseits eine zusätzliche Dichtwirkung neben der durch die Kopfbereiche der Vorsprünge erzielten Dichtwirkung erreicht wird.

Eine besonders vorteilhafte Ausführungsform der Erfindung sieht vor, daß wenigstens ein Vorsprung nach Art eines Spreizdübels als Hohlkörper mit einer senkrecht zum Grundkörper angeordneten Durchgangsöffnung ausgebildet ist. In dieser ist ein Spreizelement angeordnet ist. Die Vorrichtung wird, wie zuvor beschrieben wurde, endseitig in die Rohrplatte eingeführt. Gleichzeitig mit dem Einführen oder unmittelbar nachdem die Vorrichtung ihre bestimmungsgemäße Lage in der Rohrplatte erreicht hat, wird das Spreizelement vorzugsweise automatisch in den Vorsprung in Richtung der Rohrplatte eingeschoben. Dadurch wird der Durchmesser des Vorsprungs aufgeweitet, wodurch es zu einer Klemmwirkung zwischen Vorsprung und Rohrwandung kommt. Um ein Aufweiten des Vorsprunges zu erleichtern, kann es vorzugsweise in seinem Kopfbereich geschlitzt sein. Des weiteren kann sich die Durchgangsöffnung in Richtung der Rohrplatte verjüngen.

Weitere Vorteile und Ausführungsformen der vorliegenden Erfindung ergeben sich aus der folgenden nicht beschränkenden, beispielhaften Beschreibung bevorzugter Ausführungsformen anhand der Figuren. Dabei zeigt:
- Fig. 1: eine Seitenansicht einer ersten Ausführungsform,
- Fig. 2: eine Aufsicht auf die Ausführungsform der Fig. 1,
- Fig. 3: eine vergrößerte Teilansicht der Fig. 1,
- Fig. 4: eine perspektivische Darstellung der Ausführungsform der Fig. 1,
- Fig. 5: eine Seitenansicht einer zweiten Ausführungsform,
- Fig. 6: eine Aufsicht auf die Ausführungsform der Fig. 5,
- Fig. 7: eine vergrößerte Teilansicht der Fig. 5,
- Fig. 8: eine perspektivische Teilansicht der Ausführungsform der Fig. 5,
- Fig. 9: eine Seitenansicht einer dritten Ausführungsform,
- Fig. 10: eine Aufsicht auf die Ausführungsform der Fig. 9,
- Fig. 11: eine vergrößerte Teilansicht der Ausführungsform der Fig. 9 und
- Fig. 12: eine Schnittansicht einer weiteren Ausführungsform.

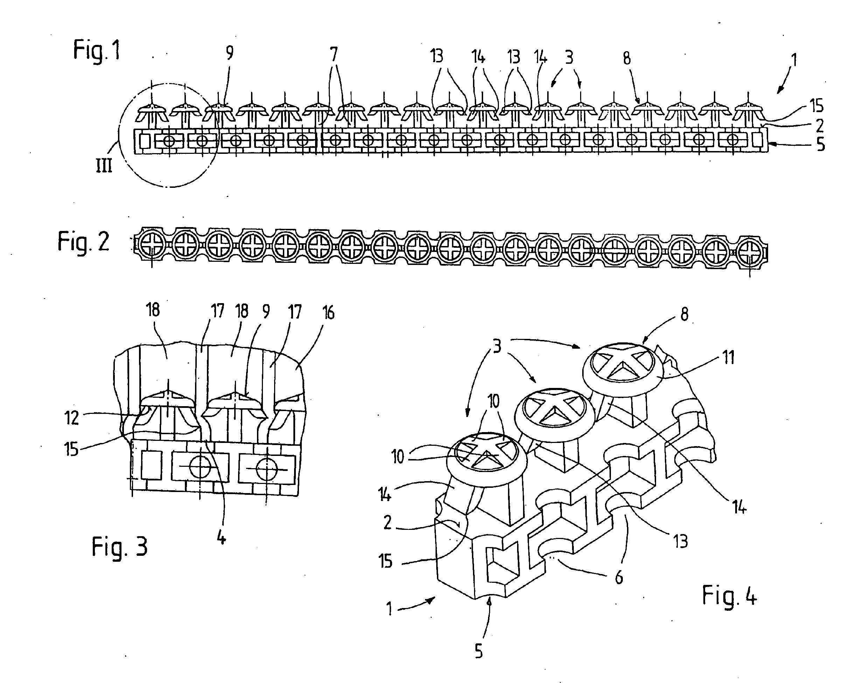

Fig. 1 zeigt eine erste Ausführungsform der erfindungsgemäßen Vorrichtung als Fußrahmenleiste 1 in einer Seitenansicht. Die Fußrahmenleiste 1 ist ein langgestrecktes, leistenartiges Profilelement mit einem Grundkörper 5, dessen bei bestimmungsgemäßer Befestigung einer Rohrplatte 16 dieser zugewandte Seitenfläche 2 in die Rohre 18 der Rohrplatte 16 hineinragende Vorsprünge 3 trägt. Die der Rohrplatte 16 zugewandte Seitenfläche 2 ist eben ausgebildet und dient als Anschlagfläche für Wandungsenden 4 der Rohrplatte 16. Der Grundkörper 5 der Fußrahmenleiste 1 ist mit zahlreichen Ausnehmungen 6 versehen, die einer späteren Befestigung der Fußrahmenleiste 1 zusammen mit einer montierten Rohrplatte 16 in einem Batteriegehäuse dienen.

Die Vorsprünge 3 der Fußrahmenleiste 1 bestehen aus einem Verbindungsstift 7 sowie einem Kopfbereich 8. Der Verbindungsstift 7 ist an der der Rohrplatte 16 zugewandten Seitenfläche 2 des Grundkörpers 5 angeordnet und trägt an der dem Grundkörper 5 gegenüberliegenden Seite den Kopfbereich 8. Kopfbereich 8, Verbindungsstift 7 und Grundkörper 5 sind im dargestellten Ausführungsbeispiel als einteiliges Spritzgußelement hergestellt.

Die dem Grundkörper 5 abgewandte Seite des Kopfbereiches 8 ist mit einer in Richtung des Verbindungsstiftes 7 konisch verlaufenden Außenkontur 9 versehen. Die konische Außenkontur 9 ist - wie insbesondere gut aus Fig. 4 ersichtlich ist - durch vier geneigte und in einem Winkel von 90° zueinander angeordnete Teilflächen 10 ausgebildet. Anschließend an die konische Außenkontur 9 weist der Kopfbereich 8 einen umlaufenden Abschlußrand 11 mit bogenförmiger Kontur auf. An der dem Grundkörper 5 zugewandten Unterseite 12 des Kopfbereiches 8 sind Rastmittel 13, 14 vorgesehen. Die Rastmittel 13, 14 erstrecken sich von der Unterseite 12 aus schräg nach außen in Richtung des Grundkörpers 5, so daß ihre Spitzen 15 über den Abschlußrand 11 der Kopfbereiche 8 hinausragen. Sie bestehen wenigstens teilweise aus einem elastischen Material oder verfügen aufgrund ihrer Form über eine gewisse Elastizität. Die Länge der Rastmittel ist unterschiedlich ausgebildet, so daß die Rastmittel 13 im Vergleich zu den Rastmitteln 14 kurz sind und ihre Spitzen 15 vom Grundkörper 5 weiter beabstandet sind als die Spitzen 15 der Rastmittel 14. Jeder Vorsprung 3 weist zwei Rastmittel 13, 14 auf. Die Rastmittel 13, 14 sind dabei einander gegenüberliegend an der Unterseite 12 des Kopfbereiche 8 angeordnet, so daß die Rastelemente 13 eines Vorsprunges 3 den Rastelementen 14 der benachbarten Vorsprünge 3 gegenüberliegen. Betrachtet man in Fig. 1 den zwischen den Vorsprüngen 3 und den Rastelementen 13, 14 vorliegenden Zwischenraum, so erkennt man, daß dieser Zwischenraum nach Art eines Labyrinthes ausgebildet ist.

Fig. 3 zeigt beispielhaft die Aufnahme von Wandungsenden 4 einer angedeutet dargestellten Rohrplatte 16. Die in den zwischen den Vorsprüngen 3 vorliegenden Zwischenräume verlaufenden Bereiche der Wandungen 17 werden durch die zuvor beschriebene Anordnung der Rastmittel 13, 14 elastisch oder plastisch verformt, so daß die Wandungen 17 einerseits am Abschlußrand 11 dichtend anliegen und andererseits derart um die Rastmittel 13, 14 gebogen sind, daß ein sicherer Halt der Vorsprünge 3 im Rohr 18 der Rohrplatte 16 gewährleistet ist. Die Wandungsenden 4 der Wandungen 17 liegen bei der in Fig. 3 dargestellten bestimmungsgemäßen Befestigung auf der Seitenfläche 2 des Grundkörpers 5 auf. Durch diese Auflage wird neben der Dichtung über den Abschlußrand 11 eine weitere endseitige Dichtung 18 erreicht.

Aufgrund der schräg nach außen und in Richtung des Grundkörpers 5 orientierten Rastmittel 13, 14 ist ein Einschieben der Fußleiste 1 in die Rohrplatte 16 einfach möglich, da die Rastmittel 13, 14 aufgrund ihrer Elastizität in Richtung des Verbindungsstiftes 7 einfedern. Bei einem Lösen der Fußleiste 1 von der Rohrplatte 16 federn die Rastmittel 13, 14 in der entgegengesetzten Richtung, d.h. von dem Verbindungsstift 7 weg, aus. Im Zusammenhang mit der Verformung der Wandungen 17 wird daher ein Trennen der Verbindung verhindert oder zumindest wesentlich erschwert.

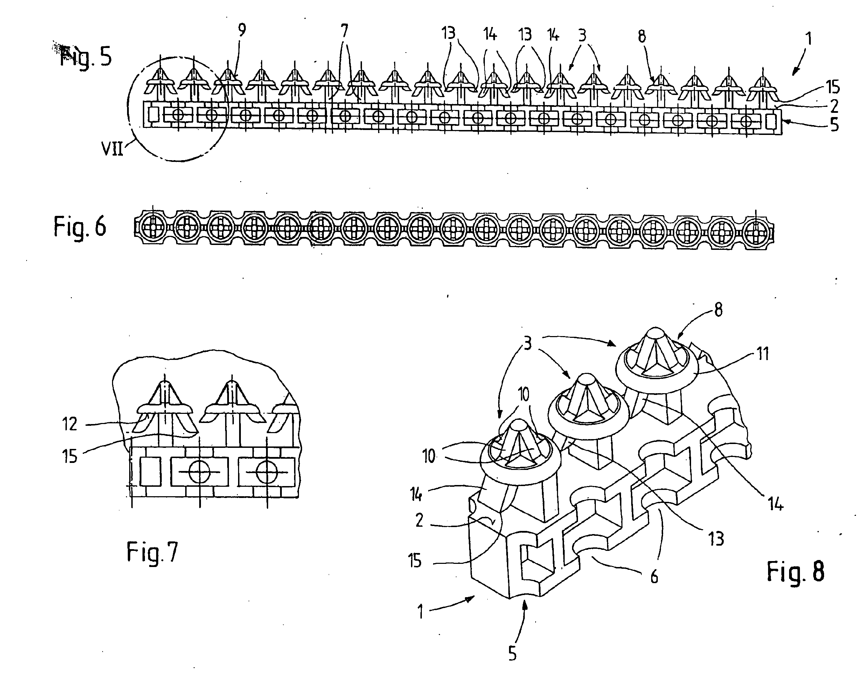

Eine zu der zuvor beschriebenen Ausführungsform ähnliche Ausführungsform zeigen die Fign. 5 bis 8. Die dort dargestellte Ausführungsform gleicht der zuvor beschriebenen im Wesentlichen. Anders als bei der Ausführungsform der Fign. 1 bis 4 ist hier allerdings die konische Außenkontur 9 erheblich steiler ausgebildet, was das Einschieben der Fußrahmenteiste 1 in die Rohrplatte 16 im Vergleich zu der zuvor beschriebenen Ausführungsform erheblich erleichtert.

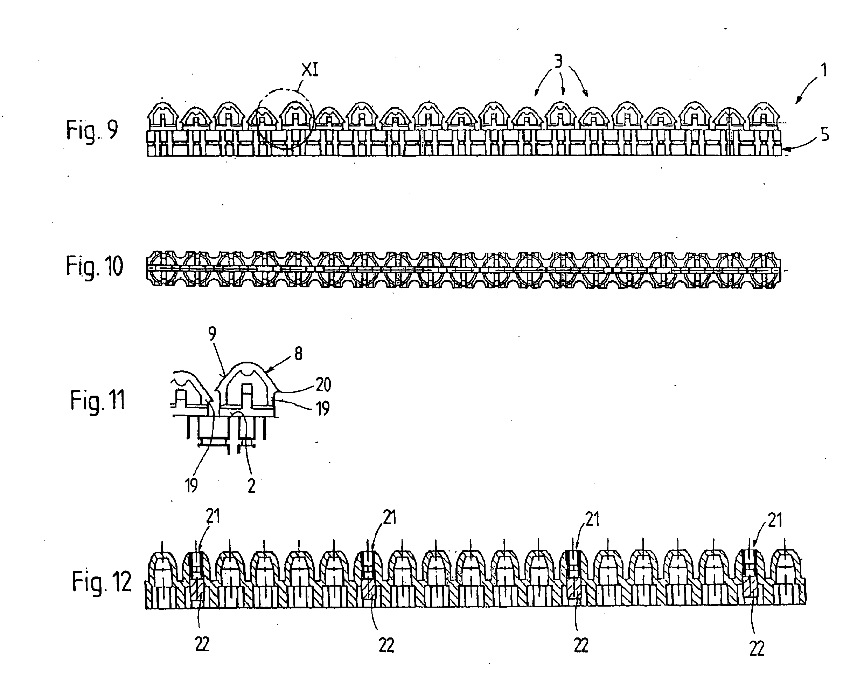

Eine weitere bevorzugte dritte Ausführungsform der Erfindung ist in den Fign. 9 bis 11 dargestellt. Die Fußleiste 1 besitzt einen Grundkörper 5, an dessen Seitenfläche 2 zahlreiche Vorsprünge 3 angeordnet sind. Die Vorsprünge 3 werden bei bestimmungsgemäßer Anordnung der Fußrahmenleiste 1 an einer Rohrplatte 16 in die zwischen den Wandungen 17 vorliegenden Rohre 18 eingeschoben.

Die Vorsprünge 3 weisen eine ringförmige Wandung 19 auf, mit der sie an der Seitenfläche 2 des Grundkörpers 5 angeordnet sind. An der dem Grundkörper 5 gegenüberliegenden Seite der ringförmigen Wandung 19 ist ein kegelförmig ausgebildeter Kopfbereich 8 angeordnet. Die Vorsprünge 3 sind aufgrund der ringförmigen Wandungen 19 und des kegelförmigen Kopfbereiches 8 hohl ausgebildet und können wenigstens teilweise aus einem elastischen Material bestehen. Die ringförmigen Wandungen 19 zueinander benachbarter Vorsprünge 3 weisen orthogonal zur Seitenfläche 2 unterschiedliche Längen auf. Auf diese Weise wird erreicht, daß die Kopfbereiche 8 zueinander benachbarter Vorsprünge 3 unterschiedlich weit von der Seitenfläche 2 des Grundkörpers 5 beabstandet sind. Am Übergang von der ringförmigen Wandung 19 in den Kopfbereich 8 ist jeder Vorsprung 3 mit einem ringförmigen, nach außen hervorstehenden Vorsprung oder Kragen 20 versehen. Dieser Kragen 20 dient als Rastmittel, das bei bestimmungsgemäßer Befestigung der Fußrahmenleiste 1 die Wandungen 17 der Rohrplatte 16 kontaktiert. Wie auch bei den Ausführungsformen der Fign. 1 bis 9 wird auch bei der hier beschriebenen Ausführungsform erreicht, daß sich die zwischen den Vorsprüngen 3 befindlichen Wandungen 4 verformen und so ein sicherer und fester Sitz der Fußleiste 1 in der Rohrplatte 16 gewährleistet ist.

Fig. 12 zeigt eine weitere Ausführungform der Erfindung. Einige der Vorsprünge 3 sind mit einer Durchgangsöffnung 21 versehen, die die Vorsprünge 3 senkrecht zur Seitenfläche 2 durchragen. Die Durchgangsöffnung 21 weist eine Querschnittsminderung 23 auf. In der Durchgangsöffnung 21 ist ein Klemmelement 22 angeordnet. Die in Fig. 12 gezeigten Stellungen der Klemmelemente 22 liegen vor und während der Montage der Fußrahmenleiste 1 vor. Die Klemmelemente 22 dringen nur teilweise in die Durchgangsöffungen 21 ein. Sie kontaktieren dabei nicht den Bereich der Querschnittsminderung 23. Befindet sich die Fußrahmenleiste 1 in ihrer bestimmungsgemäßen Lage in der Rohrplatte 16, so werden die Klemmelemente 22 tiefer in die Durchgangsöffungen 21 hineingetrieben, so daß die Vorsprünge 3 aufgrund der Wechselwirkung der Klemmelemente 3 mit der Querschnittsminderung 23 gespreizt werden und in den Rohren 18 verklemmen.

### Bezugszeichenliste

- 1: Fußrahmenleiste
- 2: Seitenfläche
- 3: Vorsprung
- 4: Wandungsende
- 5: Grundkörper
- 6: Ausnehmung
- 7: Verbindungsstift
- 8: Kopfbereich
- 9: Außenkontur
- 10: Teilfläche
- 11: Abschlußrand
- 12: Unterseite
- 13: Rastmittel
- 14: Rastmittel
- 15: Spitzte
- 16: Rohrplatte
- 17: Wandung
- 18: Rohr
- 19: Ringförmige Wandung
- 20: Kragen
- 21: Durchgangsöffnung
- 22: Klemmelement

## Patentansprüche

1. Vorrichtung zum Verschließen von Rohrplatten (16) von Batterien, vorzugsweise Bleibatterien, aufweisend einen Grundkörper (5), an dem Vorsprünge (3) angeordnet sind, die bei bestimmungsgemäßer Anordnung der Vorrichtung endseitig in Rohre (18) einer Rohrplatte (16) der Batterie eingreifen, wobei die Vorsprünge (3) gegenüber den Wandungen der Rohre (18) vorgespannt sind und die Vorrichtung mit den gegenüber den Wandungen der Rohre (18) vorgespannten Vorsprüngen (3) befestigt ist,
**dadurch gekennzeichnet,**
**dass** die die Wandungen (17) kontaktierenden Bereiche (15) der Rastmittel (13, 14) benachbarter Vorsprünge (3) derart relativ zueinander angeordnet sind, dass zwischen benachbarten Vorsprüngen (3) angeordnete Bereiche der Wandungen (17) verformt werden.

2. Vorrichtung nach Anspruch 1, **dadurch gekennzeichnet, dass** wenigstens zwei benachbarte Vorsprünge (3) mit Rastmitteln (13, 14) versehen sind, die mit den Wandungen (17) der Rohre (18) verklemmen.

3. Vorrichtung nach Anspruch 1 oder 2, **dadurch gekennzeichnet, dass** die die Wandungen (17) kontaktierenden Bereiche (15) der Rastmittel (13, 14) benachbarter Vorsprünge (3) vom Grundkörper (5) unterschiedlich beabstandet sind.

4. Vorrichtung nach einem der vorhergehenden Ansprüche, **dadurch gekennzeichnet, dass** die die Wandungen (17) kontaktierenden Bereiche (15) der Rastmittel (13, 14) benachbarter Vorsprünge (3) sich in einer zum Grundkörper (5) parallelen Richtung überlappen.

5. Vorrichtung nach einem der vorhergehenden Ansprüche, **dadurch gekennzeichnet, dass** die Vorsprünge (3) einen am Grundkörper (5) angeordneten stiftartigen Verbindungsbereich (7) aufweisen, an dessen vom Grundkörper (5) abwandten Ende ein Kopfbereich (8) angeordnet ist, dessen Außenkontur (11) entsprechend dem Innenquerschnitt des jeweiligen Rohres (18) der Rohrplatte (16) ausgebildet ist.

6. Vorrichtung nach einem der Ansprüche 1 bis 3, **dadurch gekennzeichnet, dass** die Vorsprünge (3) eine am Grundkörper (5) angeordnete ringförmige Wandung (19) aufweisen, deren vom Grundkörper (5) abgewandte Seite mit einem Kopfbereich (8) verschlossen ist, dessen Außenkontur (11) entsprechend dem Innenquerschnitt des jeweiligen Rohres (18) der Rohrplatte (16) ausgebildet ist.

7. Vorrichtung nach Anspruch 5 oder 6, **dadurch gekennzeichnet, dass** die Kopfbereiche (8) der Vorsprünge (3) vom Grundkörper (5) gleich beabstandet sind und die Rastmittel (13, 14) unterschiedliche Längen aufweisen.

8. Vorrichtung nach Anspruch 5 oder 6, **dadurch gekennzeichnet, dass** die Kopfbereiche (8) nebeneinander liegender Vorsprünge (3) vom Grundkörper (5) unterschiedlich beabstandet sind.

9. Vorrichtung nach einem der Ansprüche 5 bis 8, **dadurch gekennzeichnet, dass** die Rastmittel (13, 14) am Kopfbereich (8) angeordnet sind.

10. Vorrichtung nach einem der Ansprüche 5 bis 9, **dadurch gekennzeichnet, dass** die Kopfbereiche (8) der Vorsprünge (3) parallel zum Grundkörper (5) eine runde Außenkontur (11) aufweisen.

11. Vorrichtung nach einem der Ansprüche 5 bis 10, **dadurch gekennzeichnet, dass** die Kopfbereiche (8) an ihrer vom Grundkörper (5) abgewandten Seite eine konisch ausgebildete Kontur (9) aufweisen.

12. Vorrichtung nach einem der Ansprüche 5 bis 11, **dadurch gekennzeichnet, dass** die Kopfbereiche (8) wenigstens teilweise elastisch ausgebildet sind.

13. Vorrichtung nach einem der Ansprüche 5 bis 12, **dadurch gekennzeichnet, dass** die Rastmittel (13, 14) als um den Kopfbereich (8) umlaufender Vorsprung (20) ausgebildet sind.

14. Vorrichtung nach einem der Ansprüche 5 bis 13, **dadurch gekennzeichnet, dass** die Rastmittel (13, 14) durch an einander gegenüberliegenden Stellen der Kopfbereiche (8) benachbarter Vorsprünge (3) angeordnete Haken ausgebildet sind.

15. Vorrichtung nach einem der vorhergehenden Ansprüche, **dadurch gekennzeichnet, dass** der Grundkörper (5) leistenförmig ausgebildet ist.

16. Vorrichtung nach einem der vorhergehenden Ansprüche, **dadurch gekennzeichnet, dass** der Grundkörper (5) eine Anschlagfläche (2) aufweist, an die die Wandungen (17) der Rohrplatte (16) bei bestimmungsgemäßer Anordnung vorzugsweise dichtend anstoßen.

17. Vorrichtung nach einem der vorhergehenden Ansprüche, **dadurch gekennzeichnet, dass** wenigstens ein Vorsprung (3) nach Art eines Spreizdübels als Hohlkörper mit einer senkrecht zum Grundkörper (5) angeordneten Durchgangsöffnung (21) ausgebildet ist.

18. Vorrichtung nach Anspruch 17, **dadurch gekennzeichnet, dass** in der Durchgangsöffnung (21) des Vorsprunges (3) ein Spreizelement (22) angeordnet ist.

19. Vorrichtung nach Anspruch 17 oder 18, **dadurch gekennzeichnet, dass** sich die Durchgangsöffnung (21) in Richtung der Rohrplatte (16) verjüngt.

## Claims

1. Device for closing off tube plates (16) of batteries, preferably lead-acid batteries, having a base body (5) on which projections (3) are arranged, which, in the case of the proper arrangement of the device, engage at the end into tubes (18) of a tube plate (16) of the battery, wherein the projections (3) are pretensioned against the walls of the tubes (18) and the device is fixed with the projections (3) pretensioned against the walls of the tubes (18),
**characterised**
**in that** the regions (15) of the snap-in means (13, 14) of adjacent projections (3) which contact the walls (17), are arranged relatively to one another in such a manner that regions of the walls (17) arranged between adjacent projections (3) are deformed.

2. Device according to Claim 1, **characterised in that** at least two adjacent projections (3) are provided with snap-in means (13, 14), which snap-in means jam with the walls (17) of the tubes (18).

3. Device according to Claim 1 or 2, **characterised in that** the regions (15) of the snap-in means (13, 14) of adjacent projections (3) which contact the walls (17) are differently spaced from the base body (5).

4. Device according to one of the preceding claims, **characterised in that** the regions (15) of the snap-in means (13, 14) of adjacent projections (3) which contact the walls (17) overlap in a direction parallel to the base body (5).

5. Device according to one of the preceding claims, **characterised in that,** arranged on the base body (5), the projections (3) have a pin-like connection region (7), on the end of which, which end faces away from the base body (5), a head region (8) is arranged, the outer contour (11) of which is constructed in a manner corresponding to the inner cross section of the respective tube (18) of the tube plate (16).

6. Device according to one of Claims 1 to 3, **characterised in that** the projections (3) have an annular wall (19) arranged on the base body (5), the side of which annular wall, which side faces away from the base body (5), is closed off with a head region (8), the outer contour (11) of which head region is constructed in a manner corresponding to the inner cross section of the respective tube (18) of the tube plate (16).

7. Device according to Claim 5 or 6, **characterised in that** the head regions (8) of the projections (3) are evenly spaced from the base body (5) and the snap-in means (13, 14) have different lengths.

8. Device according to Claim 5 or 6, **characterised in that** the head regions (8) of adjacent projections (3) are differently spaced from the base body (5).

9. Device according to one of Claims 5 to 8, **characterised in that** the snap-in means (13, 14) are arranged on the head region (8).

10. Device according to one of Claims 5 to 9, **characterised in that** the head regions (8) of the projections (3) have a round outer contour (11) parallel to the base body (5).

11. Device according to one of Claims 5 to 10, **characterised in that** the head regions (8) have a conically formed contour (9) at their side which faces away from the base body (5).

12. Device according to one of Claims 5 to 11, **characterised in that** the head regions (8) are at least partially elastically constructed.

13. Device according to one of Claims 5 to 12, **characterised in that** the snap-in means (13, 14) are constructed as projections (20) running around the head region (8).

14. Device according to one of Claims 5 to 13, **characterised in that** the snap-in means (13, 14) are constructed by hooks on mutually opposite points of the head regions (8) of adjacent projections (3).

15. Device according to one of the preceding claims, **characterised in that** the base body (5) is constructed in a strip-shaped manner.

16. Device according to one of the preceding claims, **characterised in that** the base body (5) has a stop surface (2), which the walls (17) of the tube plate (16) preferably adjoin in a sealing manner in the case of proper arrangement.

17. Device according to one of the preceding claims, **characterised in that** at least one projection (3) is constructed, in the manner of a straddling dowel, as a hollow body with a through opening (21) arranged perpendicularly to the base body (5).

18. Device according to Claim 17, **characterised in that** a spreading element (22) is arranged in the through-opening (21) of the projection (3).

19. Device according to Claim 17 or 18, **characterised in that** the through-opening (21) tapers in the direction of the tube plate (16).

## Revendications

1. Dispositif de fermetures de plaques tubulaires (16) de batteries, de préférence de batteries au plomb, présentant un corps de base (5), sur lequel des protubérances (3) sont disposées, lesquelles dans le cadre d'un agencement conventionnel du dispositif viennent en prise aux extrémités avec les tubes (18) d'une plaque tubulaire (16) de la batterie, dans lequel les protubérances (3) sont précontraintes par rapport aux parois des tubes (18) et le dispositif est fixé avec les protubérances (3) précontraintes par rapport aux parois des tubes (18),
**caractérisé en ce que**
les zones (15) contactant les parois (17) des protubérances (3) adjacentes aux moyens d'encliquetage (13,14) sont disposées les unes par rapport aux autres de telle sorte que des zones des parois (17) disposées entre des protubérances (3) adjacentes soient déformées.

2. Dispositif selon la revendication 1, **caractérisé en ce que** au moins deux protubérances (3) adjacentes sont pourvues de moyens d'encliquetage (13,14), qui se coincent avec les parois (17) des tubes (18).

3. Dispositif selon la revendication 1 ou 2, **caractérisé en ce que** les zones (15) contactant les parois (17) des protubérances (3) adjacentes aux moyens d'encliquetage (13,14) sont espacées différemment du corps de base (5).

4. Dispositif selon une des revendications précédentes, **caractérisé en ce que** les zones (15) contactant les parois (17) des protubérances (3) adjacentes aux moyens d'encliquetage (13,14) se superposent dans une direction parallèle au corps de base (5).

5. Dispositif selon une des revendications précédentes, **caractérisé en ce que** les protubérances (3) présentent une zone de liaison (7) du type à broches disposée sur le corps de base (5), à l'extrémité se détournant du corps de base (5) de laquelle une zone de tête (8) est disposée, dont le contour extérieur (11) est configuré de manière à correspondre à la section transversale intérieure du tube (18) respectif de la plaque tubulaire (16).

6. Dispositif selon une des revendications 1 à 3, **caractérisé en ce que** les protubérances (3) présentent une paroi (19) annulaire disposée sur le corps de base (5), dont le côté qui se détourne du corps de base (5) est fermé par une zone de tête (8), dont le contour extérieur (11) est configuré de manière à correspondre à la section transversale intérieure du tube (18) respectif de la plaque tubulaire (16).

7. Dispositif selon la revendication 5 ou 6, **caractérisé en ce que** les zones de tête (8) des protubérances (3) sont espacées également du corps de base (5) et les moyens d'encliquetage (13,14) présentent des longueurs différentes.

8. Dispositif selon la revendication 5 ou 6, **caractérisé en ce que** les protubérances (3) attenantes aux zones de tête (8) sont espacées différemment du corps de base (5).

9. Dispositif selon une des revendications 5 à 8, **caractérisé en ce que** les moyens d'encliquetage (13,14) sont disposés sur la zone de tête (8).

10. Dispositif selon une des revendications 5 à 9, **caractérisé en ce que** les zones de tête (8) des protubérances (3) présentent un contour extérieur (11) rond parallèlement au corps de base (5).

11. Dispositif selon une des revendications 5 à 10, **caractérisé en ce que** les zones de tête (8) présentent sur leur côté qui se détourne du corps de base (5) un contour (9) à configuration conique.

12. Dispositif selon une des revendications 5 à 11, **caractérisé en ce que** les zones de tête (8) ont une configuration au moins partiellement élastique.

13. Dispositif selon une des revendications 5 à 12, **caractérisé en ce que** les moyens d'encliquetage (13,14) sont configurés comme une protubérance (20) faisant le tour de la zone de tête (8).

14. Dispositif selon une des revendications 5 à 13, **caractérisé en ce que** les moyens d'encliquetage (13,14) sont réalisés par des crochets disposés sur des protubérances (3) adjacentes à des emplacements se faisant face des zones de tête (8).

15. Dispositif selon une des revendications précédentes, **caractérisé en ce que** le corps de base (5) est configuré en forme de baguette.

16. Dispositif selon une des revendications précédentes, **caractérisé en ce que** le corps de base (5) présente une surface de butée (2), sur laquelle les parois (17) de la plaque tubulaire (16) viennent buter de préférence en étanchéité dans le cadre d'un agencement conventionnel.

17. Dispositif selon une des revendications précédentes, **caractérisé en ce que** au moins une protubérance (3) est configurée à la manière d'une cheville expansible comme un corps creux comportant une ouverture traversante (21) disposée perpendiculairement au corps de base (5).

18. Dispositif selon la revendication 17, **caractérisé en ce que** un élément d'écartement (22) est disposé dans l'ouverture traversante (21) de la protubérance (3).

19. Dispositif selon la revendication 17 ou 18, **caractérisé en ce que** l'ouverture traversante (21) s'amincit dans la direction de la plaque tubulaire (16).
